# EUROPEAN PATENT APPLICATION

(11) **EP 4 454 879 A1**
(43) Date of publication of application: **30.10.2024**
(21) Application number: 22910912.9
(22) Date of filing: 08.12.2022
(51) Int. Cl.: B32B 9/00, B32B 7/02, B32B 27/00, B65D 65/40, C08J 5/18, C08J 7/048

(54) **GAS BARRIER MULTILAYER BODY AND PACKAGE**

(30) Priority: 23.12.2021 JP 2021209183
(71) Applicant: DIC Corporation, Tokyo 174-8520 (JP)
(72) Inventor: HAYASHI Masanori, Sakura-shi, Chiba 285-8668 (JP); HARADA Tomoaki, Sakura-shi, Chiba 285-8668 (JP)
(74) Representative: Kraus & Lederer PartGmbB
(86) International application number: PCT/JP2022/045217
(87) International publication number: WO 2023/120201

(57) **Abstract**

Provided is a gas barrier multilayer body formed by multilayering a layer (A) including a base material in which an inorganic layer is formed on at least one surface, a resin layer (B) containing a resin having a glass transition temperature of 40°C or lower, provided to be in contact with the surface on which the inorganic layer of the base material is formed, and a layer (C) containing a water-soluble polymer, and metal alkoxide and/or a hydrolysate thereof, provided to be in contact with the resin layer (B). In addition, the invention provides a package formed by using the gas barrier multilayer body.

## Description

### TECHNICAL FIELD

The present invention provides a multilayer body having gas barrier properties and a package. In addition, in the gas barrier multilayer body and the package of the invention, adhesiveness between each layer of the multilayer body is excellent, and an adhesive strength is improved.

### BACKGROUND ART

A packaging material used for packaging food, drug medicine, or the like is required to prevent the degeneration of contents, in particular, the oxidation due to oxygen. In response to such a request, in the related art, a barrier film containing a polymer (an oxygen barrier polymer) that is assumed to have comparatively high oxygen barrier properties, or a multilayer body (a multilayer film) using the barrier film as a film base material is used.

In addition, recently, a sustainable package containing a single material such as an olefin-based film and has improved recyclability has attracted attention, and there is an increasing demand for further imparting gas barrier properties to the olefin-based film with poor gas barrier properties.

As the related art, as described in PTL 1, a gas barrier multilayer film formed by multilayering a vapor-deposited layer containing an inorganic compound as a first layer, and a gas barrier coated film formed by applying, heating, and drying a coating agent containing a water-soluble polymer, an aqueous solution containing at least any one of (a) one or more types of alkoxides and/or hydrolysates thereof and (b) tin chloride, or a water/alcohol mixed solution as a main component, as a second layer, and a packaging material using the gas barrier multilayer film are proposed.

Further, in PTL 2, a multilayer film including a resin base material, and a covering layer on the resin base material, in which the covering layer contains a water-soluble polymer, at least one of a silane coupling agent and a hydrolysate thereof, at least one of metal alkoxide and a hydrolysate thereof, and an inorganic layer-shaped compound, is disclosed, and a gas barrier multilayer film combined with a polypropylene-based base material, a silicon oxide-deposited layer, and a gas barrier coating layer is proposed.

However, the coating agent for a gas barrier exhibits high gas barrier properties, but there is a problem that it is difficult to obtain adhesiveness with respect to a multilayer base material in which a film base material is covered with an aluminum oxide-deposited layer as the first layer, and a material composition that provides coating adequacy and adhesiveness regardless of the base material is desired.

### CITATION LIST

### PATENT LITERATURE

PTL 1: JP2790054B
PTL 2: WO2016/158794

### SUMMARY OF INVENTION

### TECHNICAL PROBLEM

An object of the invention is to provide a gas barrier multilayer body that exhibits excellent adhesive strength between layers and excellent gas barrier properties even in the case of providing a vapor-deposited layer of aluminum oxide or the like.

### SOLUTION TO PROBLEM

As a result of intensive studies, the present inventors have found that the object described above can be attained by a gas barrier multilayer body formed by multilayering a base material layer (A) in which an inorganic layer is formed on at least one surface, a resin layer (B) containing a resin having a glass transition temperature of 40°C or lower, provided to be in contact with the surface of the base material on which the inorganic layer is formed, and a layer (C) containing a water-soluble polymer, and metal alkoxide and/or a hydrolysate thereof, provided to be in contact with the resin layer (B).

[1] The invention provides a gas barrier multilayer body formed by multilayering a layer (A) including a base material in which an inorganic layer is formed on at least one surface, a resin layer (B) containing a resin having a glass transition temperature of 40°C or lower, provided to be in contact with the surface of the base material on which the inorganic layer is formed, and a layer (C) containing a water-soluble polymer, and metal alkoxide and/or a hydrolysate thereof, provided to be in contact with the resin layer (B).
[2] The invention provides the gas barrier multilayer body according to [1], in which the inorganic layer in the layer (A) is formed by either a vapor deposition treatment or a sputtering treatment.
[3] The invention provides the gas barrier multilayer body according to [1] or [2], in which the inorganic layer in the layer (A) contains one or more types of inorganic substances selected from the group consisting of aluminum oxide, silicon oxide, aluminum, zinc oxide, and magnesium oxide.
[4] The invention provides the gas barrier multilayer body according to any of [1] to [3], in which the resin having a glass transition temperature of 40°C or lower is one or more types of resins selected from an ester resin, a urethane resin, a vinyl resin, an acrylic resin, and an acrylate resin.
[5] The invention provides the gas barrier multilayer body according to any of [1] to [4], in which the water-soluble polymer is one or more types of water-soluble polymers selected from a vinyl alcohol polymer, an ethylene vinyl alcohol polymer, a vinyl pyrrolidone polymer, and an acrylamide polymer.
[6] The invention provides the gas barrier multilayer body according to any of [1] to [5], in which the metal alkoxide and/or the hydrolysate thereof are a compound having one or more types selected from silicon and aluminum as a metal species.
[7] The invention provides a package formed by using the gas barrier multilayer body according to any of [1] to [6].

### DESCRIPTION OF EMBODIMENTS

A gas barrier multilayer body of the invention includes a layer (A) containing a base material in which an inorganic layer is formed on at least one surface (hereinafter, may be referred to as a layer (A)). Here, the material, the production method, and the shape of the base material used in the layer (A) are not particularly limited within a range where the effect of the invention is obtained. As the material of the base material, for example, an olefin-based resin such as polyethylene (PE) or polypropylene (PP), a cyclic olefin polymer (COP), and a cyclic olefin copolymer (COC), polyester, acryl, polycarbonate, cellulose ester, polyethylene terephthalate (PET), polybutylene terephthalate (PBT), nylon (NY), a biomass film, and the like can be used, and it is preferable to use PE and PP since the effect of the invention is remarkably obtained.

As the base material used in the layer (A), a film with a thickness of less than 250 µm, a sheet with a thickness of 250 µm or more and less than 1 mm, and a plate-shaped base material with a thickness of 1 mm or more can be used, and a sheet or a film with a thickness of 500 µm or less is particularly preferable since the effect of improving the gas barrier properties of the invention is preferably obtained. A production method of the base material is not particularly limited, and the base material can be produced by using various film formation methods such as a melt extrusion molding method, a solution casting molding method, and a calender molding method, and the base material may be used by being further biaxially stretched or uniaxially stretched. In addition, as necessary, a film subjected to various surface treatments may be used.

The layer (A) of the invention includes the base material layer in which the inorganic layer is formed on at least one surface, and the inorganic layer is formed on a part or all of at least one surface of the base material. An inorganic substance for forming such an inorganic layer is not particularly limited within a range where the effect of the invention is obtained, and it is preferable to use one or more types selected from a metal and a metal oxide such as aluminum oxide, silicon oxide, aluminum, zinc oxide, magnesium oxide, calcium oxide, zirconium oxide, and it is particularly preferable to use one or more types selected from aluminum oxide, silicon oxide, aluminum, zinc oxide, and magnesium oxide since excellent barrier properties are exhibited.

In the layer (A) of the invention, as a method for forming the inorganic layer is not particularly limited within a range where the effect of the invention is obtained, and can be formed by a vapor deposition treatment, a sputtering treatment, a CVD treatment, and a coating treatment, and it is particularly preferable to use the vapor deposition treatment or the sputtering treatment since the inorganic layer can be homogeneously formed.

The gas barrier multilayer body of the invention includes a resin layer (B) containing a resin having a glass transition temperature of 40°C or lower, provided to be in contact with the surface of the base material on which the inorganic layer is formed (hereinafter, may be referred to as a layer (B)). Here, the layer (B) may be multilayered such that at least a part is directly in contact with the inorganic layer provided in the layer (A).

The resin having a glass transition temperature of 40°C or lower, used in the gas barrier multilayer body of the invention, may be a resin of which the glass transition temperature when measured by using a test piece of which each side has a length of 0.5 mm, in accordance with a transition temperature measurement method of plastic that is defined in a JIS method K7121-1987, is 40°C or lower. As the resin having a glass transition temperature of 40°C or lower, one or more types of resins selected from an ester resin, a urethane resin, a vinyl resin, an acrylic resin, an acrylate resin, an amine resin, an ether resin, and an acetal resin can be used, and the ester resin, the urethane resin, and the acrylic resin are preferable since the adhesive strength of the multilayer body is excellent, and the ester resin and the urethane resin are particularly preferable since the gas barrier properties are further improved.

A method for coating the resin having a glass transition temperature of 40°C or lower in the layer (B) of the invention is not particularly limited, and a known and conventional coating method can be used. Examples thereof include a spraying method, a spin coating method, a dipping method, a roll coating method, a blade coating method, a doctor roll method, a doctor blade method, a curtain coating method, a slit coating method, a screen printing method, an inkjet method, and a dispensing method, and it is particularly preferable to coat the resin by the roll coating method using a gravure coater since an excellent coated film is formed.

The coating amount of the resin having a glass transition temperature of 40°C or lower is not particularly limited within a range where the effect of the invention is obtained, but is preferably 0.05 to 0.5 g/m², and is particularly preferably 0.1 to 0.3 g/m² since an excellent coated film is formed.

It is preferable that a drying step is provided after the coating of the layer (B). The drying step may be room-temperature drying, or forced drying such as heating using an oven or the like, depressurization, and blowing may be performed.

The layer (B) in the invention contains the resin having a glass transition temperature of 40°C or lower as described above, but other resins, and additives such as a plasticizer, a dispersant, a surfactant, a stabilizer, a thickener, an antifoaming agent, a wetting agent, a curing agent, an antiblocking agent, a lubricant, an antiseptic agent, an inorganic filling agent, and a coupling agent may be compounded within a range where the effect of the invention is obtained.

The gas barrier multilayer body of the invention includes a layer (C) containing a water-soluble polymer, and metal alkoxide and/or a hydrolysate thereof, provided to be in contact with the resin layer (B) (hereinafter, may be referred to as a layer (C)). Here, the layer (C) may be multilayered such that at least a part is directly in contact with the layer (B).

The water-soluble polymer used in the gas barrier multilayer body of the invention is not particularly limited within a range where the effect of the invention is obtained, and one or more types of water-soluble polymers selected from a vinyl alcohol polymer such as polyvinyl alcohol, an ethylene vinyl alcohol polymer, a vinyl pyrrolidone polymer, an acrylic acid polymer, starch, methyl cellulose, carboxymethyl cellulose, sodium alginate, and the like can be used, and it is preferable to use one or more types selected from the vinyl alcohol polymer, the ethylene vinyl alcohol polymer, the vinyl pyrrolidone polymer, and the acrylic acid polymer since preferred gas barrier properties are obtained.

The metal alkoxide and/or the hydrolysate thereof used in the gas barrier multilayer body of the invention are not particularly limited within a range where the effect of the invention is obtained, but metal alkoxide and/or a hydrolysate thereof having one or more types of metal species selected from silicon, aluminum, titanium, and zirconia are preferable as a metal species, and it is more preferable to have one or more types selected from silicon and aluminum as the metal species since the gas barrier properties are excellent.

The metal alkoxide and/or the hydrolysate thereof may be one or more types of compounds selected from metal alkoxide and a hydrolysate thereof in which a hydroxyl group of a hydroxide of the metal species is substituted with an alkoxy group represented by -OCH₃, -OC₂H₅, -OC₃H₇, -OCₙH₂ₙ₊₁, and the like. As the metal alkoxide and the hydrolysate thereof used in the invention, alkoxysilane such as tetraethoxysilane (TEOS), tetramethoxysilane, tetrapropoxysilane, and tetrabutoxysilane can be used, and one or more types of metal alkoxides and/or hydrolysates thereof selected from tetraethoxysilane and tetramethoxysilane are particularly preferable since the gas barrier properties are excellent.

In the invention, it is preferable that the water-soluble polymer, the metal alkoxide and/or the hydrolysate thereof, one or more types of organic solvents selected from the group consisting of water, and an organic solvent soluble in water, such as methanol, ethanol, isopropanol, and 1-propanol are mixed to prepare a sol, the obtained sol is coated onto the layer (B) and dried to be gelled and solidified, and thus, the layer (C) containing the water-soluble polymer, and the metal alkoxide and/or the hydrolysate thereof is formed.

In the layer (C) of the invention, a method for coating the mixed sol is not particularly limited, and a known and conventional coating method can be used. Examples thereof include a spraying method, a spin coating method, a dipping method, a roll coating method, a blade coating method, a doctor roll method, a doctor blade method, a curtain coating method, a slit coating method, a screen printing method, an ink jet method, and a dispensing method, and it is particularly preferable to coat the sol by the roll coating method using a gravure coater since an excellent coated film is formed.

The coating amount of the mixed sol is not particularly limited within a range where the effect of the invention is obtained, but is preferably 0.1 to 0.5 g/m², and is particularly preferably 0.2 to 0.4 g/m² since an excellent coated film is formed.

It is preferable that a drying step is provided after the coating of the layer (C). The drying step may be room-temperature drying, or forced drying such as heating using an oven or the like, depressurization, and blowing may be performed.

The layer (C) in the invention may be compounded with a wetting agent such as a silane coupling agent or a surfactant within a range where the effect of the invention is obtained.

In the invention, the layer (B) and the layer (C) may be a combination for forming a rigid film by a polycondensation reaction according to a sol-gel method, and as necessary, various catalysts or solvents may be added, and heating and drying, or the like may be performed.

In the gas barrier multilayer body of the invention, other base materials, a coating material such as an ink, a coating agent, an additive, and the like may be variously combined, in addition to the layers (A), (B), and (C).

### (Other Base Materials)

The material of the other base materials to be used is not particularly limited, and may be suitably selected in accordance with the purpose, examples thereof include wood, a metal, a metal oxide, plastic, paper, silicon or modified silicon, and the other base materials may be a base material obtained by joining different materials. The shape of the base material is not particularly limited, and may be any shape according to the purpose, such as a flat-plate shape, a sheet shape, or a three-dimensional shape with a curvature on all or a part of the surface. In addition, the hardness, the thickness, and the like of the base material are not also limited. In addition, in a case where a multilayer body according to the invention is used as a packaging material, paper, plastic, a metal, a metal oxide, and the like may be used as the base material.

In the case of producing the multilayer body according to the invention by using a coating agent, a coating method of the coating agent is not particularly limited, and a known and conventional coating method can be used. Examples of the coating method include a spraying method, a spin coating method, a dipping method, a roll coating method, a blade coating method, a doctor roll method, a doctor blade method, a curtain coating method, a slit coating method, a screen printing method, an inkjet method, and a dispensing method.

The coated layer obtained by coating the coating agent is dried after coating, and thus, the ionic bond in the coated layer is dense. Accordingly, it is preferable that a drying step is provided after coating. The drying step may be room-temperature drying, or forced drying such as heating, depressurizing, and blowing may be performed.

### (Additives)

The composition of the invention may contain various additives within a range where the effect of the invention is not impaired. As the additive, for example, a modifier, a coupling agent, a silane compound, a phosphoric acid compound, an organic filler, an inorganic filler, a stabilizer (an antioxidant, a thermal stabilizer, an ultraviolet absorber, and the like), a plasticizer, an antistatic agent, a lubricant, an antiblocking agent, a colorant, a crystal nucleation agent, an oxygen scavenger (a compound having an oxygen scavenging function), a tackifier, and the like can be exemplified. Only one type of such various additives may be used alone, or two or more types thereof may be used in combination.

Examples of the modifier include a known and conventional modifier, and for example, various compounds such as diol, an amine compound, carbodiimide, or isocyanate may be added.

As the coupling agent, a known and conventional coupling agent is used, and examples thereof include a silane coupling agent, a titanium coupling agent, a zirconium coupling agent, and an aluminum coupling agent.

As the silane coupling agent, a known and conventional silane coupling agent may be used, and examples thereof include an epoxy group-containing silane coupling agent such as 3-glycidoxypropyl trimethoxysilane, 3-glycidoxypropyl triethoxysilane, 3-glycidoxypropyl methyl diethoxysilane, and 2-(3,4-epoxy cyclohexyl) ethyl trimethoxysilane; an amino group-containing silane coupling agent such as 3-aminopropyl trimethoxysilane, N-2-(aminoethyl)-3-aminopropyl methyl dimethoxysilane, 3-triethoxysilyl-N-(1,3-dimethyl butylidene) propyl amine, and N-phenyl-γ-aminopropyl trimethoxysilane; a (meth)acryloyl group-containing silane coupling agent such as 3-acryloxypropyl trimethoxysilane and 3-methacryloxypropyl triethoxysilane; and an isocyanate group-containing silane coupling agent such as 3-isocyanate propyl triethoxysilane.

Examples of the titanium coupling agent include isopropyl triisostearoyl titanate, isopropyl trioctanoyl titanate, isopropyl dimethacryl isostearoyl titanate, isopropyl isostearoyl diacryl titanate, isopropyl tris(dioctyl pyrophosphate) titanate, tetraoctyl bis(ditridecyl phosphate) titanate, tetra(2,2-diallyl oxymethyl-1-butyl) bis(ditridecyl) phosphatetitanate, bis(dioctyl pyrophosphate) oxyacetate titanate, and bis(dioctyl pyrophosphate) ethylene titanate.

Examples of the zirconium coupling agent include zirconium acetate, ammonium zirconium carbonate, and zirconium fluoride.

Examples of the aluminum coupling agent include acetoalcoxyaluminum diisopropylate, aluminum diisopropoxymonoethyl acetoacetate, aluminum trisethyl acetoacetate, and aluminum trisacetyl acetonate.

Examples of the silane compound include alkoxysilane, silazane, and siloxane. Examples of the alkoxysilane include methyl trimethoxysilane, dimethyl dimethoxysilane, phenyl trimethoxysilane, methyl triethoxysilane, dimethyl diethoxysilane, phenyl triethoxysilane, n-propyl trimethoxysilane, n-propyl triethoxysilane, hexyl trimethoxysilane, hexyl triethoxysilane, octyl triethoxysilane, decyl trimethoxysilane, 1,6-bis(trimethoxysilyl) hexane, and trifluoropropyl trimethoxysilane. Examples of the silazane include hexamethyl disilazane. Examples of the siloxane include hydrolyzable group-containing siloxane.

Among the additives, examples of the inorganic filler include an inorganic substance such as a metal, a metal oxide, a resin, and a mineral, and a complex thereof. Specific examples of the inorganic filler include silica, alumina, titanium, zirconia, copper, iron, silver, mica, talc, an aluminum flake, a glass flake, and a clay mineral.

Examples of the compound having an oxygen scavenging function include a low-molecular-weight organic compound that reacts with oxygen, such as a hindered phenol-based compound, vitamin C, vitamin E, an organic phosphorus compound, a gallic acid, and pyrogallol, and a transition metal compound such as cobalt, manganese, nickel, iron, and copper.

Examples of the tackifier include a xylene resin, a terpene resin, a phenol resin, and a rosin resin. By adding the tackifier, it is possible to improve tackiness with respect to various base materials immediately after application. It is preferable that the added amount of the tackifier is 0.01 to 5 parts by mass with respect to 100 parts by mass of the total amount of the resin composition.

The multilayer body according to the invention may be a multilayer body including multiple layers in which an upper layer portion is further multilayered on the base material and the coated layer. In this case, the upper layer portion may be multilayered before the coating agent is dried, or may be multilayered after the coating agent is dried. The upper layer portion is not particularly limited, and wood, a metal, a metal oxide, plastic, paper, silicon or modified silicon, and the like may be multilayered. In addition, an uncured resin solution may be applied from the coated layer, and cured or dried to form the upper layer portion.

### (Type of Gas Component of which Permeation can be Blocked)

As the gas that can be blocked by the gas barrier multilayer body of the invention, in addition to oxygen, carbon dioxide, nitrogen, inert gas such as argon, an alcohol component such as methanol, ethanol, and propanol, phenols such as phenol and cresol, and aroma components containing a low-molecular-weight compound, for example, the odor of a soy sauce, a sauce, a bean paste, limonene, menthol, methyl salicylate, coffee, cocoa, and the like can be exemplified.

The gas barrier multilayer body of the invention has excellent gas barrier properties and is rigid, and thus, can be preferably used as a package, in particular, a package for food, a daily commodity, an electronic material, a medical purpose, or the like, which requires the barrier properties.

### EXAMPLES

Hereinafter, the invention will be described by using Examples, but the invention is not limited to Examples. Note that, unless otherwise specified, the unit is in terms of weight.

### (Production Example 1: Preparation of Layer A)

An anchor coating liquid obtained by compounding an acrylic coating agent (GAC-013S, manufactured by DIC Corporation) and a polyisocyanate-based curing agent (KR-90, manufactured by DIC Corporation) at a mixing ratio of 5 : 1 was applied onto a biaxially stretched polypropylene film (FOR, manufactured by Futamura Chemical Co., Ltd., a thickness of 20 µm) by a gravure coating method, and dried such that a dried film thickness was approximately 0.05 µm to obtain an aluminum oxide-deposited OPP film. After that, in a vacuum vapor deposition device using an electron beam heating method, metal aluminum was vapor-deposited and oxygen gas was introduced to form a vapor-deposited thin layer including aluminum oxide with a thickness of 20 nm on the anchor coated layer.

### (Production Example 2: Preparation of Layer B)

### (Preparation of Coating Agent b-1)

30 parts of a polyester resin (VYLON 500, manufactured by TOYOBO CO., LTD., Tg: 4°C) was added to 70 parts of ethyl acetate and dissolved, and then, 200 parts of methyl ethyl ketone (MEK) was added thereto to prepare a coating agent (b-1) (a solid content concentration of 10%).

### (Preparation of Coating Agent b-2)

30 parts of a polyester resin (VYLON 670, manufactured by TOYOBO CO., LTD., Tg: 7°C) was added to 70 parts of ethyl acetate and dissolved, and then, 200 parts of methyl ethyl ketone (MEK) was added thereto to prepare a coating agent (b-2) (a solid content concentration of 10%).

### (Preparation of Coating Agent b-3)

30 parts of a polyester resin (VYLON GK330, manufactured by TOYOBO CO., LTD., Tg: 16°C) was added to 70 parts of ethyl acetate and dissolved, and then, 200 parts of methyl ethyl ketone (MEK) was added thereto to prepare a coating agent (b-3) (a solid content concentration of 10%).

### (Preparation of Coating Agent b-4)

30 parts of a polyester resin (VYLON GK780, manufactured by TOYOBO CO., LTD., Tg: 36°C) was added to 70 parts of ethyl acetate and dissolved, and then, 200 parts of methyl ethyl ketone (MEK) was added thereto to prepare a coating agent (b-4) (a solid content concentration of 10%).

### (Preparation of Coating Agent b-5)

200 parts of methyl ethyl ketone (MEK) was added to 100 parts of a polyurethane resin (VYLON UR3210, manufactured by TOYOBO CO., LTD., a solid content concentration of 30% (a MEK solution), Tg: -3°C) to prepare a coating agent (b-5) (a solid content concentration of 10%).

### (Preparation of Coating Agent b-6)

30 parts of a polyester resin (VYLON 600, manufactured by TOYOBO CO., LTD., Tg: 47°C) was added to 70 parts of ethyl acetate and dissolved, and then, 200 parts of methyl ethyl ketone (MEK) was added thereto to prepare a coating agent (b-6) (a solid content concentration of 10%).

### (Preparation of Coating Agent b-7)

30 parts of a polyester resin (VYLON 226, manufactured by TOYOBO CO., LTD., Tg: 65°C) was added to 70 parts of ethyl acetate and dissolved, and then, 200 parts of methyl ethyl ketone (MEK) was added thereto to prepare a coating agent (b-7) (a solid content concentration of 10%).

### (Preparation of Coating Agent b-8)

30 parts of a polyester resin (VYLON GK880, manufactured by TOYOBO CO., LTD., Tg: 84°C) was added to 70 parts of ethyl acetate and dissolved, and then, 200 parts of methyl ethyl ketone (MEK) was added thereto to prepare a coating agent (b-8) (a solid content concentration of 10%).

### (Preparation of Coating Agent b-9)

350 parts of methyl ethyl ketone (MEK) was added to 100 parts of a polyurethane resin (VYLON UR8210, manufactured by TOYOBO CO., LTD., a solid content concentration of 45% (a MEK solution), Tg: 73°C) to prepare a coating agent (b-9) (a solid content concentration of 10%).

### (Production Example 3: Preparation of Layer C)

Polyvinyl alcohol (PVA) (PVA60-98, manufactured by Kuraray Co., Ltd., completely saponified PVA) with the degree of polymerization of 2400 was dissolved in a mixed solvent of Water/Isopropyl Alcohol (IPA) = 98/2 (a mass ratio) at a solid content concentration of 5% to prepare a PVA solution. Next, 0.1 N of a hydrochloric acid was added to tetraethoxysilane (Si(OC₂H₅)₄, hereinafter, will be referred to as "TEOS", KBE-04, manufactured by Shin-Etsu Chemical Co., Ltd.), stirred for 30 minutes and hydrolyzed to prepare a TEOS hydrolyzed solution with a solid content of 3% (in terms of SiO₂). The PVA solution and the TEOS hydrolyzed solution were mixed such that PVA/TEOS (in terms of SiO₂) was 30/70 at a solid content mass ratio to prepare a coating liquid (c).

### (Example 1: Production of Multilayer Body)

The vapor-deposited layer of the aluminum oxide-deposited OPP film produced in Production Example 1 was coated with the coating agent b-1 by a bar coater, dried for 1 minute in a hot-air dryer set at 70°C to form a resin layer B-1 with a dried film thickness of 0.2 µm. After that, the layer was coated with the coating liquid (c), and dried for 1 minute in a hot-air dryer set at 80°C to form a metal alkoxide-containing layer C with a dried film thickness of approximately 0.3 µm, and thus, an OPP film multilayer body was obtained.

Subsequently, in order to produce a multilayer body for measuring a laminate strength when multilayering the OPP film multilayer body and other films, the OPP film multilayer body and a CPP film were pasted in the following procedure. The metal compound-containing layer C was coated with a bonding agent obtained by compounding DICDRY LX-830 and KW-75 (all are manufactured by DIC Corporation) at a compounding ratio of 10/1.5, and compounding ethyl acetate such that a non-volatile content was 25%, in a direction parallel to the long-axis direction of the OPP film multilayer body such that a dried film thickness was 2.5 µm, and a diluting solvent was volatilized by a dryer set at a temperature of 50°C, and then, a CPP film (P1128, manufactured by TOYOBO CO., LTD.) was pasted thereto. Aging was performed at 40°C for 3 days to obtain a multilayer body [OPP/Aluminum Oxide-Deposited Layer A/Resin Layer B-1/Metal Alkoxide-Containing Layer C/Bonding Agent/CPP] of Example 1.

### (Examples 2 to 5)

By performing the same treatment as with the production method of Example 1 except that raw materials shown in Table 1 were combined, multilayer bodies of Examples 2 to 5 were produced.

### (Comparative Examples 1 to 5)

By performing the same treatment as with the production method of Example 1 except that raw materials shown in Table 1 were combined, multilayer bodies of Comparative Examples 1 to 5 were produced.

For each of the multilayer bodies as Examples 1 to 5 and Comparative Examples 1 to 5, the evaluation of the gas barrier properties and the measurement of the laminate strength of the multilayer body were performed.

**[Table 1]**

| | | Example 1 | Example 2 | Example 3 | Example 4 | Example 5 |
|---|---|---|---|---|---|---|
| Base Material | | Aluminum Oxide-Deposited OPP | Aluminum Oxide-Deposited OPP | Aluminum Oxide-Deposited OPP | Aluminum Oxide-Deposited OPP | Aluminum Oxide-Deposited OPP |
| Coating Layer 1 | Composition | Polyester (b-1) | Polyester (b-2) | Polyester (b-3) | Polyester (b-4) | Polyurethane (b-5) |
| | Glass Transition Temperature [°C] | 4 | 7 | 16 | 36 | -3 |
| Coating Layer 2 | Composition | PVA/TEOS | PVA/TEOS | PVA/TEOS | PVA/TEOS | PVA/TEOS |
| Oxygen Barrier Properties | 0%RH | 0.1 | 0.1 | 0.1 | 0.1 | 0.1 |
| | 90%RH | 1.1 | 0.8 | 1.4 | 1.6 | 1.7 |
| Laminate Strength | | 3.3 | 3.0 | 2.7 | 2.2 | 1.8 |

**[Table 2]**

| | | Comparative Example 1 | Comparative Example 2 | Comparative Example 3 | Comparative Example 4 | Comparative Example 5 |
|---|---|---|---|---|---|---|
| Base Material | | Aluminum Oxide-Deposited OPP | Aluminum Oxide-Deposited OPP | Aluminum Oxide-Deposited OPP | Aluminum Oxide-Deposited OPP | Aluminum Oxide-Deposited OPP |
| Coating Layer 1 | Composition | - | Polyester (b-6) | Polyester (b-7) | Polyester (b-8) | Polyurethane (b-9) |
| | Glass Transition Temperature [°C] | - | 47 | 66 | 84 | 73 |
| Coating Layer 2 | Composition | PVA/TEOS | PVA/TEOS | PVA/TEOS | PVA/TEOS | PVA/TEOS |
| Oxygen Barrier Properties | 0%RH | 0.1 | 0.1 | 0.1 | 0.1 | 0.1 |
| | 90%RH | 1.4 | 0.5 | 0.4 | 0.4 | 0.6 |
| Laminate Strength | | 0.1 | 0.1 | 0.1 | 0.1 | 0.1 |

### (Evaluation of Gas Barrier Properties)

For each of the multilayer bodies obtained in Examples and Comparative Examples, oxygen permeation properties (gas barrier properties) were evaluated in the following manner. The measurement of an oxygen permeability was implemented with an oxygen permeability measurement device OX-TRAN2/21, manufactured by MOCON, on the basis of JIS-K7126-2:2006 "Plastic-Film and Sheet-Gas Permeability Test Method-Part 2: Isopiestic Method", in the atmosphere of a temperature of 23°C and a humidity of 0%RH and in the atmosphere of a temperature of 23°C and a humidity of 90%RH. RH represents a relative humidity. Note that, the unit of the oxygen permeability is cc/day·atm·m².

### (Evaluation of Laminate Strength)

Each of the multilayer bodies obtained in Examples and Comparative Examples was cut at an interval of a width of 15 mm in a direction parallel to a direction where the bonding agent was coated. Next, the long-axis end (the end cut to a width of 15 mm) of each of the multilayer bodies of Examples was peeled off between the OPP film multilayer body and the CPP film. Each of the two peeled layers was fixed to "Autograph AGS-X", manufactured by SHIMADZU CORPORATION, and peeled off by a T-type peeling method in the setting of an ambient temperature of 25°C and a peeling rate of 300 mm/minute to measure a tensile strength. Here, the measured tensile strength was the laminate strength of each of the multilayer bodies of Examples and Comparative Examples. The unit of the bonding strength is N/15 mm.

In Examples 1 to 5, the gas barrier multilayer bodies excellent in both of the oxygen barrier properties (the gas barrier properties) and the laminate strength were produced. On the other hand, in Comparative Example 1 not including the B layer, sufficient gas barrier properties and a sufficient laminate strength were not obtained, in Comparative Examples 2 to 5 using a resin not satisfying the glass transition temperature defined in the invention as the B layer, a sufficient laminate strength was not obtained. Since each of Examples and Comparative Examples includes the common CPP film, it is considered that a difference in the gas barrier properties checked between Examples and Comparative Examples is caused by a difference in the configuration of the OPP film multilayer body.

According to the results described above, it was checked that the gas barrier multilayer body having the configuration of the invention had excellent gas barrier properties and an excellent laminate strength.

### INDUSTRIAL APPLICABILITY

The gas barrier multilayer body of the invention has excellent gas barrier properties and an excellent laminate strength, and thus, can be preferably used as a packaging material, in particular, a packaging material for food, a daily commodity, an electronic material, a medical purpose, or the like, which requires barrier properties.

## Claims

1. A gas barrier multilayer body formed by multilayering:
a layer (A) including a base material in which an inorganic layer is formed on at least one surface;
a resin layer (B) containing a resin having a glass transition temperature of 40°C or lower, provided to be in contact with the surface of the base material on which the inorganic layer is formed; and
a layer (C) containing a water-soluble polymer, and metal alkoxide and/or a hydrolysate thereof, provided to be in contact with the resin layer (B).

2. The gas barrier multilayer body according to claim 1,
wherein the inorganic layer in the layer (A) is formed by either a vapor deposition treatment or a sputtering treatment.

3. The gas barrier multilayer body according to claim 1,
wherein the inorganic layer in the layer (A) contains one or more types of inorganic substances selected from the group consisting of aluminum oxide, silicon oxide, aluminum, zinc oxide, and magnesium oxide.

4. The gas barrier multilayer body according to claim 1,
wherein the resin having a glass transition temperature of 40°C or lower is one or more types of resins selected from an ester resin, a urethane resin, a vinyl resin, an acrylic resin, and an acrylate resin.

5. The gas barrier multilayer body according to claim 1,
wherein the water-soluble polymer is one or more types of water-soluble polymers selected from a vinyl alcohol polymer, an ethylene vinyl alcohol polymer, a vinyl pyrrolidone polymer, and an acrylamide polymer.

6. The gas barrier multilayer body according to claim 1,
wherein the metal alkoxide and/or the hydrolysate thereof are a compound having one or more types selected from silicon and aluminum as a metal species.

7. A package formed by using the gas barrier multilayer body according to any one of claims 1 to 6.
